(19) Europäisches Patentamt
European Patent Office
Office européen des brevets

(11) EP 3 358 797 A1

(12) EUROPEAN PATENT APPLICATION
published in accordance with Art. 153(4) EPC

(43) Date of publication:
08.08.2018 Bulletin 2018/32

(51) Int Cl.:
H04L 27/227 (2006.01)   H04B 1/10 (2006.01)
H04B 7/005 (2006.01)   H04L 27/22 (2006.01)

(21) Application number: 16851509.6

(22) Date of filing: 27.09.2016

(86) International application number:
PCT/JP2016/078405

(87) International publication number:
WO 2017/057338 (06.04.2017 Gazette 2017/14)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.09.2015 JP 2015189960

(71) Applicant: Mitsubishi Electric Corporation
Chiyoda-ku
Tokyo 100-8310 (JP)

(72) Inventors:
• YOSHIOKA, Masaru
  Tokyo 100-8310 (JP)
• TOMITSUKA, Koji
  Tokyo 100-8310 (JP)

(74) Representative: Trinks, Ole
Meissner Bolte Patentanwälte
Rechtsanwälte Partnerschaft mbB
Widenmayerstraße 47
80538 München (DE)

(54) DEMODULATION APPARATUS

(57) The present disclosure enables compensation of nonlinear distortion more precisely in comparison to related art, and improves reception characteristics.

A demodulation apparatus includes: a synchronization detector (52) to extract a reception mapping point from a reception signal transmitted wirelessly by applying synchronization detection to the reception signal, the reception signal being modulated by a modulation scheme associating discrete values with the mapping points on a complex plane; a reception mapping point corrector (1) to correct the extracted reception mapping points by multiplying by a correction coefficient and to output post-correction mapping points; an error vector calculator (2) to calculate error vectors between the post-correction mapping points and the reference mapping points; a hard-decision determiner (3) to determine a reference mapping point to be outputted as demodulation result based on the inputted error vectors; a reference mapping point estimator to update the reference mapping point to be outputted as the demodulation result using the post-correction mapping points, and to store the updated reference mapping point in a reference mapping point storage (5); and a correction coefficient updater (4) to update the correction coefficient using the error vectors and to store the updated correction coefficient in a correction coefficient storage.

FIG. 2

**Description**

Technical Field

The present disclosure relates to a demodulation apparatus that demodulates mapping points from a reception signal received by a receiving station of a wireless communication device.

Background Art

In a wireless communication system, nonlinear distortion in the transmitted signal is generated in an amplifier of the transmitting station, in a satellite repeater during satellite communication, and in an amplifier of the receiving station. Further, the transmitted signal is affected by fading, noise, and the like in the transmission path between the transmitting station and the receiving station. Due to such causes, worsening of a bit error rate characteristic, bit errors in a frame synchronization signal, and the like occur at the receiving station. Thus there is a problem of the degradation of reception characteristics, such as prolongation of the synchronization lock time and the like. Various means are proposed for compensating for the deterioration of reception characteristics.

One method calculates an average error vector between mapping points extracted from the reception signal and regular mapping points, corrects the reception signal by the average error vector, and uses the corrected reception signal to perform hard decision determining (Patent Literature 1).

Another method modifies reference mapping points based on a calculated average error vector and modifies a threshold used in the hard decision determining (Patent Literature 2).

Each of these means for compensation of distortion modifies the reception signal or the reference threshold based on the error signal to perform hard decision determining.

Citation List

Patent Literature

Patent Literature 1: Unexamined Japanese Patent Application Kokai Publication JP 2002-43992 A
Patent Literature 2: Japanese Patent JP 3 421 452 B2

Summary of Invention

Technical Problem

In a wireless communication system, reception characteristics deteriorate due to transmission path characteristics including nonlinear distortion. That is to say, problems occur at the receiving station, such as worsening of the bit error rate characteristic, errors in the frame synchronization signal, and the like. Thus there is a problem of degradation of reception characteristics such as prolongation of a synchronization lock time and the like. The methods disclosed in Patent Literature 1 and Patent Literature 2 are techniques for hard decision determining on the basis of the sought error signal by comparison between the reception signal and the corrected reference mapping points. Although the nonlinear distortion is compensated by correcting the reference mapping points, the correction using soft-decision data is not performed, and the accuracy of the compensation of nonlinear distortion may be insufficient.

An objective of the present disclosure is to obtain a demodulation apparatus capable of compensation of nonlinear distortion more precisely in comparison to the related art and capable of improvement of the reception characteristics.

Solution to Problem

The demodulation apparatus according to the present disclosure demodulates a reception signal received as a wirelessly transmitted signal modulated by a modulation scheme that associates discrete values with mapping points on a complex plane. The demodulation apparatus includes:

a synchronization detector to extract a reception mapping point by applying synchronization detection to the reception signal;
a reception mapping point corrector to correct the extracted reception mapping point by multiplying by a correction coefficient and to output a post-correction mapping point;

a correction coefficient storage to store the correction coefficient;

a reference mapping point storage to store reference mapping points used for demodulation;

an error vector calculator to calculate error vectors between the post-correction mapping point and the reference mapping points; and

a hard-decision determiner to determine a reference mapping point to be outputted as demodulation result based on the inputted error vectors.

The demodulation apparatus further includes:

a reference mapping point estimator to update the reference mapping point to be outputted as the demodulation result using the post-correction mapping point and to store the updated reference mapping point in the reference mapping point storage; and

a correction coefficient updater to update the correction coefficient using the error vectors and to store the updated correction coefficient in the correction coefficient storage.

Advantageous Effects of Invention

According to the present disclosure, nonlinear distortion can be compensated more precisely in comparison to the related art, and reception characteristics can be improved.

Brief Description of Drawings

FIG. 1     is a functional block diagram indicating a configuration of a wireless communication system using a demodulation apparatus according to Embodiment 1 of the present disclosure;

FIG. 2     is a drawing illustrating an internal configuration of a distortion compensation circuit included in the demodulation apparatus according to Embodiment 1;

FIG. 3     is a drawing illustrating an internal configuration of a reference mapping point estimator included in the demodulation apparatus according to Embodiment 1;

FIG. 4     is a flowchart relating to control of an average time constant $\alpha$ used by the reference mapping point estimator included in the demodulation apparatus according to Embodiment 1;

FIG. 5     is a drawing illustrating an internal configuration of a distortion compensation circuit included in a demodulation apparatus according to Embodiment 2 of the present disclosure;

FIG. 6     is a drawing illustrating an internal configuration of a distortion compensation circuit included in a demodulation apparatus according to Embodiment 3 of the present disclosure;

FIG. 7     is a drawing for description of a concept of detection of a direct current component performed by a direct current component detector;

FIG. 8     is a drawing illustrating an internal configuration of a distortion compensation circuit included in a demodulation apparatus according to Embodiment 4 of the present disclosure; and

FIG. 9     is a drawing for description of a concept of detection of an orthogonality error by an orthogonality error detector.

Description of Embodiments

Embodiment 1

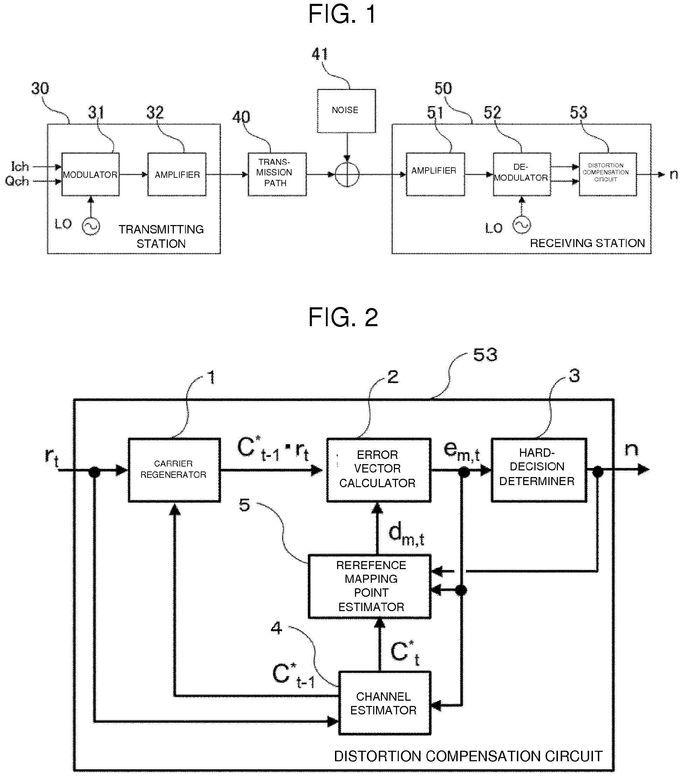

FIG. 1 illustrates a functional block diagram indicating a configuration of a wireless communication system used by a demodulation apparatus according to Embodiment 1 of the present disclosure. A transmitting station 30 includes a modulator 31 and an amplifier 32. The modulator 31 receives as input mapping signals that are a signal Ich modulated to be in-phase signal with a carrier wave, and a signal Qch that is an orthogonal signal 90 degrees advanced in phase relative to the in-phase signal. The modulator 31 outputs a carrier wave orthogonally modulated by the mapping signal. The amplifier 32 amplifies the orthogonally modulated carrier wave. The amplified signal is transmitted from a non-illustrated antenna of the transmitting station 30.

The amplified signal is affected by fading and the like in a transmission path 40, noise 41 is added, and then the amplified signal is transmitted to a receiving station 50. The receiving station 50 includes: an amplifier 51 for amplifying the reception signal received by the non-illustrated antenna so that an average power of the reception signal during a determined time period has a determined value; an orthogonal demodulator 52 that is a synchronization detector to

3

apply synchronization detection to, and extract a reception mapping point from, the amplified reception signal; and a distortion compensation circuit 53 for compensation of distortion of data undergoing orthogonal synchronization detection and separated into the Ich and Qch signals. The distortion compensation circuit 53 performs compensation for the nonlinear distortion, orthogonality error, and the like added between the transmitting station and the receiving station, and obtains the original data with fewer errors.

FIG. 2 illustrates an internal configuration of the distortion compensation circuit included in the demodulation apparatus according to Embodiment 1. The distortion compensation circuit 53 includes: a carrier regenerator 1 for retrieving a signal component (carrier regeneration signal) obtained by correcting the reception mapping point outputted by the orthogonal demodulator 52 using channel estimation result, an error vector calculator 2 to calculate error vectors that are differences between the carrier regeneration signal and reference mapping points, a hard-decision determiner 3 to determine the reference mapping point to be outputted as demodulation result based on the error vectors, a reference mapping point estimator 5 to estimate the reference mapping points on the basis of the carrier regeneration signal, and a channel estimator 4 for performing channel estimation on the basis of the error vectors.

As viewed from a different standpoint, the channel estimation result outputted by the channel estimator 4 is a correction coefficient that corrects the reception mapping point. The carrier regeneration signal outputted by the carrier regenerator 1 is a post-correction mapping point corrected by multiplying the reception mapping point by the correction coefficient. The carrier regenerator 1 is a reception mapping point corrector that outputs the post-correction mapping point corrected by multiplication of the reception mapping point by the correction coefficient. The reference mapping point estimator 5 updates the reference mapping point determined to be outputted as demodulation result using the post-correction mapping point. The reference mapping point estimator 5 is also a reference mapping point storage that stores reference mapping points used for demodulation. The reference mapping point storage may be arranged separately from the reference mapping point estimator. The channel estimator 4 is a correction coefficient updater that uses the error vectors to update the correction coefficient. The channel estimator 4 is a correction coefficient storage that stores the correction coefficient. A correction coefficient storage may be provided as a separate storage.

A case is described below in which the modulation scheme is quadrature phase shift keying (QPSK). Modulation schemes may also be used such as amplitude and phase-shift keying (APSK), quadrature amplitude modulation (QAM), and the like. A similar procedure may be executed for any such modulation scheme as long as the modulation scheme associates discrete values with the mapping points on the complex plane.

Variables are defined here as follows.

$r_t$: This is a reception mapping point obtained in a sample time period t.

$C_t$: This is the channel estimation result obtained in the sample time period t.

$C^*_{t-1} \cdot r_t$: This is the carrier regeneration signal obtained in the sample time period t. $C^*_t$ is the conjugate complex number of $C_t$.

$d_{m,t}$: This is a reference mapping point obtained in the sample time period t. m is a discrete value allocated to the reference mapping point. In the case of QPSK, m is any of 0, 1, 2, or 3.

$e_{m,t}$: This is an error vector between the reference mapping point and the carrier regeneration signal obtained in the sample time period t.

The orthogonal demodulator 53 performs synchronization detection on the reception signal to demodulate the reception signal separately as the Ich and Qch signals, and outputs the demodulation result as the complex number $r_t$. The carrier regenerator 1 performs carrier regeneration on the basis of the channel estimation result $C_{t-1}$ obtained at one sample time beforehand, and outputs the carrier regeneration signal ($C^*_{t-1} \cdot r_t$). The error vector calculator 2 calculates the error vectors between the carrier regeneration signal and each of the reference mapping points as indicated in the below Equations (1) to (4).

$$e_{0,t} = d_{0,t} - C^*_{t-1} \cdot r_t \qquad (1)$$

$$e_{1,t} = d_{1,t} - C^*_{t-1} \cdot r_t \qquad (2)$$

$$e_{2,t} = d_{2,t} - C^*_{t-1} \cdot r_t \qquad (3)$$

$$e_{3,t} = d_{3,t} - C^*_{t-1} \cdot r_t \qquad (4)$$

The hard-decision determiner 3 selects as a decision point (n) the reference mapping point that has a minimum value of a sum of the squares of each element of the error vector $e_{m,t}$. Specifically, processing such as that of the below listed Equation (5) is performed.

$$\text{decision point (n)} = \text{Min}[|e_{m,t}|^2, \; m = 0, 1, 2, 3] \qquad (5)$$

The decision point (n), or the Ich and Qch signals indicating the mapping point corresponding to the decision point (n), is the demodulation result.

Using the error vector $e_{n,t}$ obtained for the decision point (n) calculated by Equation (5), the channel estimator 4 estimates, that is, performs channel estimation of, response characteristics of the transmission path. The outputted channel estimation result (Ct) is obtained using the below Equation (6). Here, an example is indicated of channel estimation by a least mean squares (LMS) algorithm, which is one coefficient updating method used in adaptive filtering. Further, the channel estimation procedure of the present disclosure is not limited to a particular method.

$$C_t = C_{t-1} + \mu \cdot r_t \cdot e^*_{n,t} \qquad (6)$$

Here, $\mu$ is a step size setting value.

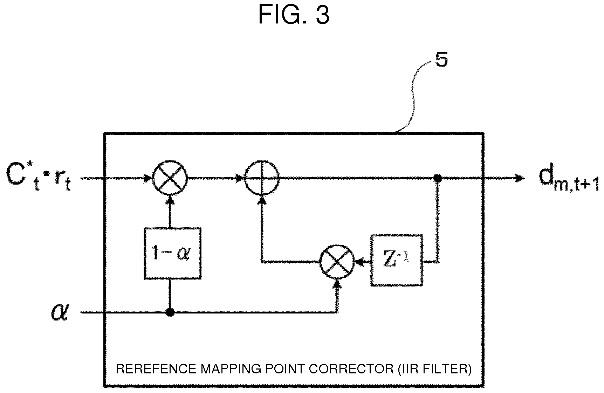

The carrier regeneration signal ($C^*_t \cdot rt$) is inputted to the reference mapping point estimator 5, which thus estimates the reference mapping point ($d_{m,t}$) so as to enable more highly accurate demodulation. The estimated value is used to update the reference mapping point ($d_{m,t}$). The channel estimation result from one sample period earlier ($C^*_{t-1}$) may be used for updating. FIG. 3 illustrates an internal configuration of the reference mapping point estimator included in the demodulation apparatus according to Embodiment 1. In Embodiment 1, the reference mapping point estimator is achieved by use of an infinite impulse response digital filter, abbreviated here as "IIR filter". The reference mapping point estimator may use another averaging method. Further, a respective IIR filter illustrated in FIG. 3 exists for each reference mapping point. In the case of the IIR filter of the configuration illustrated in FIG. 3, a reference mapping point ($d_{m,t+1}$) updated at the next sample time (t +1) is obtained by the below Equations (7) and (8). Further, the square block labeled "$Z^{-1}$" means a time delay by 1 sample period. At the time of startup, a separately-set starting value ($d_{m,0}$) is outputted as the reference mapping point for 1 sample period beforehand.

$$d_{m,t+1} = d_{m,t} \qquad \text{for } m \neq n \qquad (7)$$

$$d_{n,t+1} = (1 - \alpha) \cdot C^*_t \cdot r_t + \alpha \cdot d_{n,t} \qquad (8)$$

Here, $\alpha$ is taken to be an average time constant of the IIR filter.

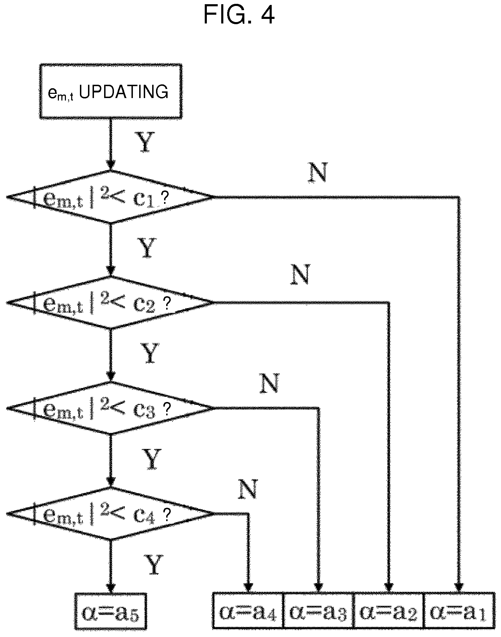

Although the time period until convergence of the reference mapping point shortens as the value of the average time constant $\alpha$ of the IIR filter increases, fluctuations in the convergence process become large. Although the time period until convergence lengthens as the value of $\alpha$ decreases, the fluctuations in the convergence process become small. Thus as indicated in the flowchart illustrated in FIG. 4, a configuration is used that adjusts the value of $\alpha$ in accordance with a time-average value of the error vector $e_{m,t}$, in a time period of a determined length. Here, a relationship $c1 > c2 > c3 > c4$ is established with respect to threshold values c1, c2, c3, and c4 compared with the square of the time-average value of the error vectors ($|e_{m,t}|^2$). Further, a relationship $a_1 > a_2 > a_3 > a_4 >$ as is established with respect to $a_1, a_2, a_3, a_4$, and $a_5$, which are values set to the average time constant $\alpha$, respectively.

As indicated by the flowchart illustrated in FIG. 4, the values of $\alpha$ decrease ($a_1 > a_2 > a_3 > a_4 > a_5$) as the remaining error vectors decrease. This thus, in comparison to the case of a fixed value of $\alpha$, enables decrease of the convergence time and suppression of the fluctuations in the convergence process. Further, the effect of the present disclosure is achieved in the case of a fixed value of $\alpha$. The IIR filter may also be used for channel estimation.

Repetition of the aforementioned processing during each sample time period enables tracking of temporal changes in the transmission path characteristics including nonlinear distortion, and enables accurate correction. By the carrier regenerator 1 performing, for all the reception mapping points (rt), carrier regeneration ($C^*_{t-1} \cdot rt$) using the channel 1-sample-time-earlier estimation result (Ct-i), compensation of phase errors in the carrier wave that are caused by the transmission path can be accomplished with good accuracy.

Further, because the correction of the transmission path characteristics that include nonlinear distortion and the correction of the reference mapping point are performed within the same loop, the present method increases accuracy of compensation in comparison to the conventional method. Because the reference mapping points are corrected by using the signals after correcting the effects of the transmission path as reference, correction of the reference mapping points is possible with further improved accuracy from the viewpoint of nonlinear distortion compensation.

Further, because the error signal is derived from the reference mapping points after correcting the effects of nonlinear distortion, compensation is possible more precisely from the viewpoint of channel estimation.

In summary, in the aforementioned manner, the demodulation apparatus of Embodiment 1 enables nonlinear distortion compensation more precisely in comparison to the related art, and enables improvement of reception characteristics. Things described above are applicable also for the other embodiments.

Embodiment 2

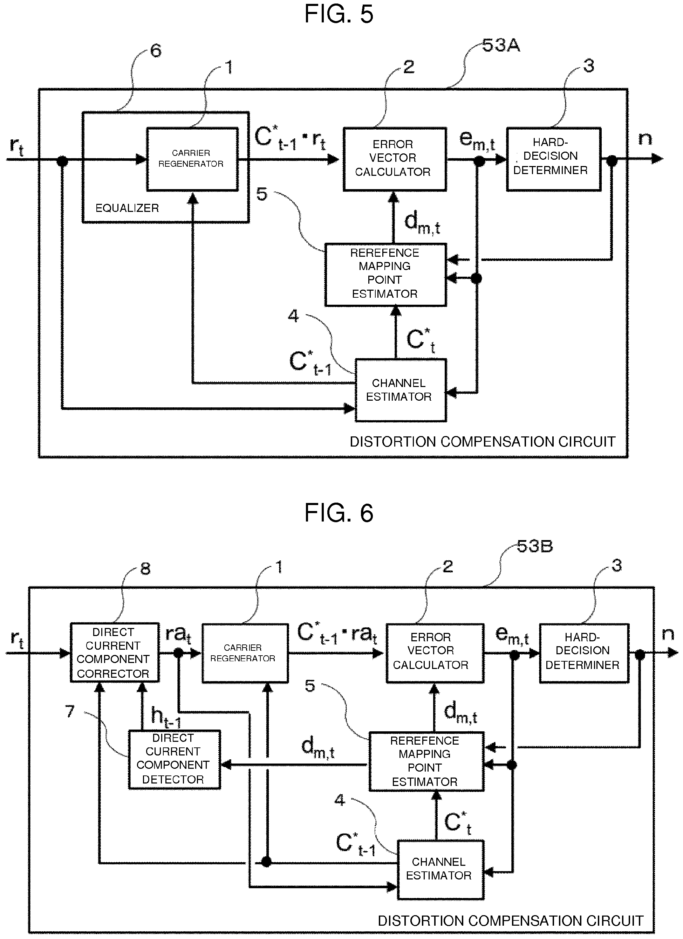

Embodiment 2, rather than using the carrier regenerator, uses an equalizer that corrects group delay characteristics and the like. The equalizer used in the present Embodiment has a mechanism for channel estimation by the adaptive filter in the same manner as the carrier regenerator. FIG. 5 illustrates an internal configuration of a distortion compensation circuit included in the demodulation apparatus according to Embodiment 2 of the present disclosure. The distortion compensation circuit 53A of Embodiment 2 includes an equalizer 6 having a carrier regenerator 1 therein. Other points are the same as in FIG. 2, which illustrates Embodiment 1.

The demodulation apparatus of Embodiment 2 operates in a manner similar to that of the demodulation apparatus of Embodiment 1, and a similar result is obtained.

Embodiment 3

In Embodiment 3, a direct current component of the reference mapping points is detected, and the reception mapping points are corrected such that the direct current component approaches zero. FIG. 6 illustrates an internal configuration of the distortion compensation circuit included in the demodulation apparatus according to Embodiment 3 of the present disclosure. The distortion compensation circuit 53B of Embodiment 3 includes: a direct current component detector 7 that detects the direct current component of the reference mapping points; and a direct current component corrector 8 that corrects the reception mapping points such that the direct current component approaches zero.

The direct current detector 7 calculates an average $(h_t)$ of all the reference mapping points. In QPSK, the mapping points are arranged such that the average of the mapping points becomes the origin point of the complex plane. Thus the average $(h_t)$ of the reference mapping points is the direct current component $(h_t)$ included in the reference mapping points.

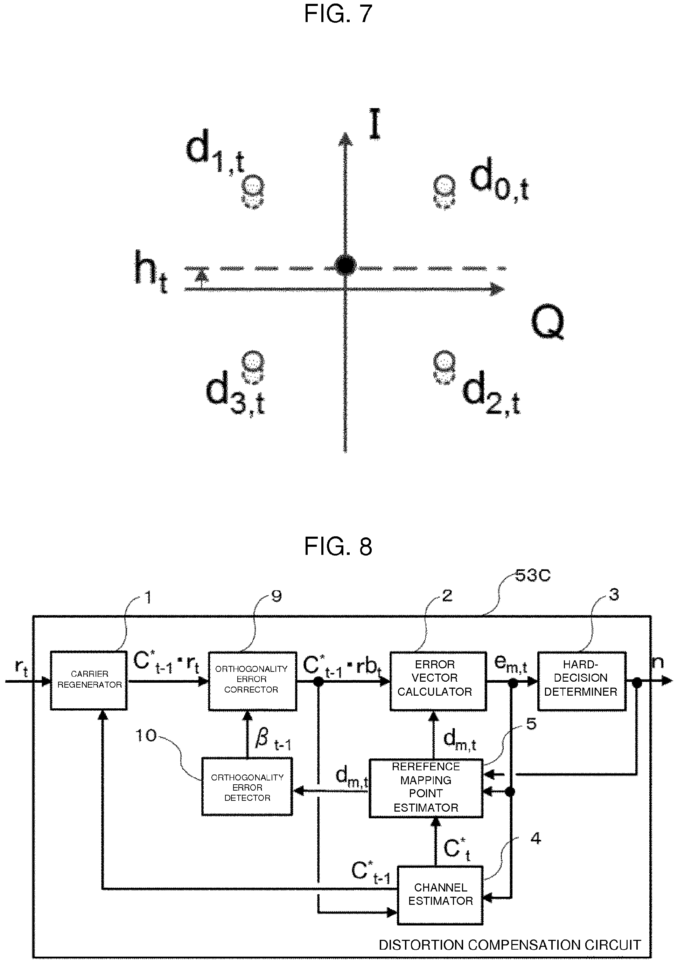

FIG. 7 illustrates a drawing for description of the concept of detection of the direct current component performed by the direct current component detector. The initial reference mapping points illustrated by the dashed-line circles are assumed to change to the reference mapping points indicated by the solid-line circles. When the average of the reference mapping points is calculated, the average is the point indicated by the black-filled circle. In the case illustrated in FIG. 7, the average of the reference mapping points exists on the I axis, and the direct current component (ht) exists only at Ich.

The direct current component $(h_{t-1})$ and channel estimation result $(C_{t-1})$ for 1 sampling time beforehand are inputted to the direct current component corrector 8, which then converts the direct current component $(h_{t-1})$ to the pre-carrier-regeneration direct current component value $(h_{t-1}/C^*_{t-1})$. Further, a value $(g_t)$ is obtained by applying suitable control such as proportional-integral control and the like to the pre-carrier-regeneration direct current component value $(h_{t-1}/C^*_{t-1})$. The determined direct current component value $(g_t)$ is subtracted from the reception mapping point $(r_t)$ outputted by the demodulator 52, and the direct-current-component-removed reception mapping point $(ra_t)$ is generated and is inputted to the carrier regenerator 1. The direct current component of the reference mapping point can approach zero in this manner. The direct-current-component-removed reception mapping point $(ra_t)$ is inputted to the carrier regenerator 1 and the channel estimator 4.

Processing thereafter is the same as that of Embodiment 1.

Removal of the direct current component from the reference mapping points enables correction of nonlinear distortion more precisely. By compensation at the stage prior to input to carrier regeneration, a range of permissible received power during the carrier regeneration and error vector calculations can be broadened, and compensation can be performed with increased accuracy.

Alternatively, the direct current component corrector may be arranged at the rear stage of the carrier regenerator 1 so that the direct current component of the carrier regeneration signal $(C^*_{t-1} \cdot r_t)$ approaches zero. In this case, the channel estimation result $(C_{t-1})$ is not inputted to the direct current component corrector.

Embodiment 4

In Embodiment 4, an orthogonality error of the reference mapping points is detected, and the reception mapping points are corrected such that the orthogonality error approaches zero. FIG. 8 illustrates an internal configuration of the distortion compensation circuit included in the demodulation apparatus according to Embodiment 4. The distortion compensation circuit 53C of Embodiment 4 includes: an orthogonality error detector 9 that detects the orthogonality error of the reference mapping points; and an orthogonality error corrector 10 that corrects the carrier regeneration signal ($C^*_{t-1} \cdot rt$) such that the orthogonality error approaches zero.

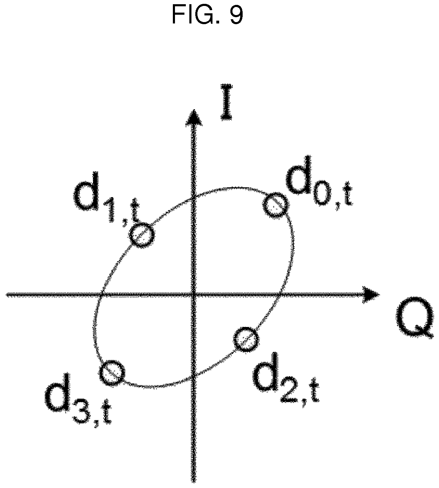

FIG. 9 illustrates a drawing for description of the concept of detection of the orthogonality error by the orthogonality error detector. When the orthogonality error exists, in QPSK, distances between the origin point and the mapping points of the first and third quadrants of the complex plane are different from the distances between the origin point and the mapping points of the second and fourth quadrants. Generally expressing so as to be applicable for cases in which other modulation schemes are used, when the mapping points are rotated by 45 degrees in the complex plane, the ratios of the magnitudes of the Ich and Qch signals at each mapping points are changed from the values before rotation. This property is used to detect and correct the orthogonality error.

The method by which the orthogonality error detector 9 detects the orthogonality error is described below. Firstly, all the reference mapping points are rotated by 45 degrees. Sets of mapping points that are positioned symmetrically with respect to the I axis after rotation are obtained. For each of obtained sets of mapping points, a distance is obtained between two mapping points in the set. A sum (Li) is obtained of the distances of each set of the mapping points that are symmetric with respect to the I axis.

Similar processing is also performed for the Q axis. Sets of mapping points are obtained that result in positions symmetrical with respect to the Q axis after rotation by 45 degrees. For each of obtained sets of the mapping points, a distance is obtained between two mapping points in the set. A sum ($Q_l$) is obtained of the distances of all the sets of mapping points that are symmetric with respect to the Q axis. An orthogonality coefficient ($\gamma_t = L_l/Q_l$), which is the ratio of magnitude of the Ich signal to the Qch signal, is obtained. The orthogonality coefficient may be obtained by a method different from the method described here.

The 1-sampling-time-earlier orthogonality coefficient ($\gamma_{t-1}$) is inputted to the orthogonality error corrector 10. A post-adjustment orthogonality coefficient ($\beta_t$) is obtained by applying suitable control, such as proportional-integral control, of the orthogonality coefficient ($\gamma_{t-1}$). The carrier regeneration signal ($C^*_{t-1} \cdot rt$) is rotated by 45 degrees. For example, if $\beta_t > 1$, then the Qch signal is increased $\beta_t$-fold. If $\beta_t < 1$, the Ich signal is increased ($1/\beta_t$)-fold. Alternatively, rather than using the value of $\beta_t$, the Qch signal may be multiplied by ($\beta_t$)$^{1/2}$, and the Ich signal may be multiplied by ($\beta_t$)$^{-1/2}$. The carrier regeneration signal is rotated thereafter by -45 degrees. The carrier regeneration signal removed orthogonality error ($C^*_{t-1} \cdot rbt$) is inputted to the carrier regenerator 1 and the channel estimator 4. Such operation enables the orthogonality error of the reference mapping points to approaches zero.

Processing thereafter is the same as that of Embodiment 1.

Removal of the orthogonality error of the reference mapping points enables correction of nonlinear distortion more precisely. The orthogonality error corrector may be arranged at the front stage of the carrier regenerator 1 so that the orthogonality error of the reception mapping signal approaches zero. In this case, the orthogonality error corrector does not use the channel estimation result ($C_{t-1}$).

The direct current component correction and the orthogonality error correction may both be performed.

Although the foregoing discussion has presented specific embodiments, persons skilled in the art will recognize that changes may be made in form and detail without departing from the broader spirit and scope of the invention.

List of Reference Signs

1 Carrier regenerator (reception mapping point corrector)
2 Error vector calculator
3 Hard-decision determiner
4 Channel estimator (correction coefficient updater, correction coefficient storage)
5 Reference mapping point estimator (reference mapping point storage)
6 Equalizer
7 Direct current component detector
8 Direct current component corrector
9 Orthogonality error detector
10 Orthogonality error corrector
30 Transmitting station
31 Modulator
32 Amplifier
40 Wireless transmission path
41 Noise occurring in wireless transmission path

**EP 3 358 797 A1**

50 Receiving station
51 Amplifier
52 Orthogonal demodulator (synchronization detector)
53, 53A, 53B, 53C Distortion compensation circuit

**Claims**

1. A demodulation apparatus comprising:

   - a synchronization detector to extract a reception mapping point from a reception signal transmitted wirelessly by applying synchronization detection to the reception signal, the reception signal being modulated by a modulation scheme associating discrete values with the reception mapping points on a complex plane;
   - a reception mapping point corrector to correct the extracted reception mapping point by multiplying by a correction coefficient and to output a post-correction mapping point;
   - a correction coefficient storage to store the correction coefficient;
   - a reference mapping point storage to store reference mapping points used for demodulation;
   - an error vector calculator to calculate error vectors between the post-correction mapping point and the reference mapping points;
   - a hard-decision determiner to determine a reference mapping point to be outputted as demodulation result based on the inputted error vectors;
   - a reference mapping point estimator to update the reference mapping point to be outputted as the demodulation result using the post-correction mapping point and to store the updated reference mapping point in the reference mapping point storage; and
   - a correction coefficient updater to update the correction coefficient using the error vectors and to store the updated correction coefficient in the correction coefficient storage.

2. The demodulation apparatus according to claim 1,
   wherein the reference mapping point estimator is an infinite impulse response digital filter.

3. The demodulation apparatus according to claim 2,
   wherein an average time constant of the infinite impulse response digital filter changes in response to magnitude of the error vectors.

4. The demodulation apparatus according to any one of claims 1 to 3, further comprising:

   - a direct current component detector to detect direct current component of the reference mapping points; and
   - a direct current component corrector to correct the reception mapping points or the post-correction mapping point such that the direct current component approaches zero.

5. The demodulation apparatus according to any one of claims 1 to 4, further comprising:

   - an orthogonality error detector to detect orthogonality error of the reference mapping points; and
   - an orthogonality error corrector to correct the reception mapping points or the post-correction mapping point such that the orthogonality error approaches zero.

6. The demodulation apparatus according to any one of claims 1 to 5, further comprising an equalizer to correct group delay characteristics, the equalizer including the reception mapping point corrector.

8

# FIG. 1

# FIG. 2

# FIG. 3

REREFENCE MAPPING POINT CORRECTOR (IIR FILTER)

FIG. 4

```
        ┌──────────────────┐
        │  e_{m,t} UPDATING │
        └──────────────────┘
                 │ Y
                 ▼
              ╱─────────╲                              N
          ◄──┤ |e_{m,t}|² < c₁? ├──────────────────────────────┐
              ╲─────────╱                                        │
                 │ Y                                             │
                 ▼                                               │
              ╱─────────╲                    N                   │
          ◄──┤ |e_{m,t}|² < c₂? ├────────────────────┐          │
              ╲─────────╱                              │          │
                 │ Y                                   │          │
                 ▼                                     │          │
              ╱─────────╲             N                │          │
          ◄──┤ |e_{m,t}|² < c₃? ├──────────┐          │          │
              ╲─────────╱                    │          │          │
                 │ Y                         │          │          │
                 ▼                           │          │          │
              ╱─────────╲       N            │          │          │
          ◄──┤ |e_{m,t}|² < c₄? ├──┐        │          │          │
              ╲─────────╱          │        │          │          │
                 │ Y               │        │          │          │
                 ▼                 ▼        ▼          ▼          ▼
            ┌────────┐        ┌───────┬───────┬───────┬───────┐
            │ α=a₅   │        │ α=a₄  │ α=a₃  │ α=a₂  │ α=a₁  │
            └────────┘        └───────┴───────┴───────┴───────┘
```

## FIG. 5

DISTORTION COMPENSATION CIRCUIT

## FIG. 6

DISTORTION COMPENSATION CIRCUIT

## FIG. 7

## FIG. 8

FIG. 9

EP 3 358 797 A1

## INTERNATIONAL SEARCH REPORT

| | International application No. |
|---|---|
| | PCT/JP2016/078405 |

A. CLASSIFICATION OF SUBJECT MATTER
*H04L27/227*(2006.01)i, *H04B1/10*(2006.01)i, *H04B7/005*(2006.01)i, *H04L27/22* (2006.01)i

According to International Patent Classification (IPC) or to both national classification and IPC

B. FIELDS SEARCHED

Minimum documentation searched (classification system followed by classification symbols)
H04L27/227, H04B1/10, H04B7/005, H04L27/22

Documentation searched other than minimum documentation to the extent that such documents are included in the fields searched
Jitsuyo Shinan Koho          1922-1996   Jitsuyo Shinan Toroku Koho   1996-2016
Kokai Jitsuyo Shinan Koho    1971-2016   Toroku Jitsuyo Shinan Koho   1994-2016

Electronic data base consulted during the international search (name of data base and, where practicable, search terms used)
IEEE Xplore, CiNii

C. DOCUMENTS CONSIDERED TO BE RELEVANT

| Category* | Citation of document, with indication, where appropriate, of the relevant passages | Relevant to claim No. |
|---|---|---|
| Y | JP 2015-2355 A  (Sony Corp.), 05 January 2015 (05.01.2015), paragraphs [0005] to [0017] & WO 2014/199866 A1     & EP 3010190 A1 paragraphs [0005] to [0017] | 1-6 |
| Y | Satoshi SUYAMA et al., "Iterative Decision-directed Phase Noise Compensation In Millimeter-wave Ofdm Transmission", IEICE Technical Report, 20 June 2008 (20.06.2008), vol.108, no.117, pages 55 to 60, RCS2008-25 | 1-6 |

☒ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 November 2016 (07.11.16) | 15 November 2016 (15.11.16) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2016/078405

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-300515 A (Canon Inc.), 24 December 2009 (24.12.2009), paragraphs [0065] to [0079] & US 2009/0303215 A1 paragraphs [0078] to [0090] & CN 101604504 A | 2-6 |
| Y | JP 2012-80499 A (Tokai Rika Co., Ltd.), 19 April 2012 (19.04.2012), paragraphs [0003] to [0025] (Family: none) | 4-6 |
| Y | JP 2002-43992 A (Nippon Hoso Kyokai), 08 February 2002 (08.02.2002), paragraphs [0058] to [0063]; fig. 7 to 8 (Family: none) | 5-6 |
| Y | Yuta SAGAE et al., "Scattered Pilot Shingo yo OFDM Turbo Toka Jushin ni Okeru LMS ni yoru Kanryakuka Channel Suitei", 2003 Nen IEICE Communications Society Conference Koen Ronbunshu 1, 10 September 2003 (10.09.2003), page 450, B-5-73 | 6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002043992 A

- JP 3421452 B